# EUROPÄISCHE PATENTSCHRIFT

(11) **EP 2 384 537 B1**
(45) Veröffentlichungstag und Bekanntmachung des Hinweises auf die Patenterteilung: **31.07.2013**
(21) Anmeldenummer: 09749100.5
(22) Anmeldetag: 04.11.2009
(51) Int. Cl.: H02P 6/00, H02M 1/44

(54) **VERFAHREN ZUM BETREIBEN EINES BÜRSTENLOSEN GLEICHSTROMMOTORS**
METHOD FOR OPERATING A BRUSHLESS DC MOTOR
PROCÉDÉ DE FONCTIONNEMENT D'UN MOTEUR À COURANT CONTINU SANS BALAIS

(30) Priorität: 02.01.2009 DE 102009000012
(43) Veröffentlichungstag der Anmeldung: 09.11.2011
(73) Patentinhaber: Robert Bosch GmbH, 70442 Stuttgart (DE)
(72) Erfinder: MUELLER, Andreas, 71735 Eberdingen (DE); EISENHARDT, Harald, 71277 Rutesheim (DE)
(86) Internationale Anmeldenummer: PCT/EP2009/064609
(87) Internationale Veröffentlichungsnummer: WO 2010/076069

(56) Entgegenhaltungen:
- DE-A1- 4 018 930
- GB-A- 1 037 939
- SU-A1- 1 728 954
- US-A1- 2006 132 081

## Beschreibung

Die Erfindung betrifft ein Verfahren zum Betreiben eines bürstenlosen Gleichstrommotors, der mittels eines Pulsweitenmodulations-Ansteuersignals über mindestens zwei Voll brücken, die zumindest einen passiven Freilaufstrom aufweisen, angesteuert wird.

### Stand der Technik

Verfahren der eingangs genannten Art sind bekannt. Bestimmte Voraussetzungen verlangen häufig einen besonders geräuscharmen elektrischen Antrieb von Geräten, wie zum Beispiel Lüftern in einem Fahrzeuginnenraum. Häufig werden dazu bürstenlose Gleichstrommotoren in Form von 3-Phasen-Synchronmaschinen mit Sinus-Ansteuerung verwendet. Dabei erfolgt die Sinus-Ansteuerung zur Geräuschoptimierung üblicherweise durch einen Inverter, der mittels Pulsweitenmodulations-Signalen angesteuert wird. Drei (oder mehr) Halbbrücken schalten dabei die Highside- und Lowside-Schaltelemente pulsweitenmoduliert im Wechsel. Dadurch ist die resultierende Ausgangsspannung immer eindeutig bestimmbar und die gewünschte Sinusspannung generierbar. Zwar glättet eine Spuleninduktivität des Gleichstrommotors üblicherweise die Rechteckspannung der Pulsweitenmodulation zu einem mittleren Strom mit kleinem, akzeptablem Stromripple, ein den Gleichstrom überlagernder Wechselstrom, jedoch verschiebt die Spuleninduktivität Strom und Spannung zueinander, sodass der Strom der Spannung hinterher eilt. Dies ist unvorteilhaft bei Verfahren zur sensorlosen Lageerkennung des Rotors der Gleichstrommaschine. Gleichstrommotoren mit einer kleinen/niedrigen Spuleninduktivität sind dagegen vorteilhaft für derartige Lageerkennungsverfahren, da in diesem Fall der Strom dem Spannungsverlauf sehr schnell folgt. Bei sehr niederinduktiven bürstenlosen Gleichstrommotoren entsteht jedoch bei dem oben genannten PWM-Inverter-Standard-Verfahren ein sehr hoher Ripplestrom, der bei kleinen Drehzahlen deutlich größer als der eigentlich benötigte Spulenstrom ist. Der dadurch entstehende Blindstrom verursacht ungewünschte Wirkungsgradverluste sowie ungünstige elektromagnetische Abstrahlungen. Darüber hinaus ist die Ansteuerung der für das oben beschriebene Verfahren notwendigen Standard-Inverter extrem zeitkritisch.

Schaltungstechnisch einfacher, zeitunkritischer und daher kostengünstiger sind Lösungen, bei denen ein passiver Freilauf bei zumindest einer der Brücken verwendet wird. Hier kann die Spuleninduktivität über die Freilaufdiode nach Öffnen des entsprechenden Schaltelements weiter fließen. Hierdurch entstehen im Falle von niederinduktiven Gleichstrommotoren, in denen der Spulenstrom während eines Pulsweitenmodulations-Zyklusses auf null zurückgeht, Verzerrungen des gewünschten Spannungsverlaufs durch den passiven Freilauf. Insbesondere bei geräuschsensiblen Anwendungen kommt daher der passive Freilauf bisher nicht zum Einsatz.

Aus der DE 4018 930 A1 ist beispielsweise ein Brückenzweig von Gleichstromstellern oder Pulswechselrichtern mit abschaltbaren Leitungshalbleitern bekannt. Bei diesem wird durch Überlappung der Leitend-Zustände der abschaltbaren Leistungshalbleiter die speisende Gleichspannung über eine wirksame Induktivität zeitweise kurzgeschlossen. Dadurch wird ein Querstrom aufgebaut, dessen Mittelwert unabhängig oder weitgehend unabhängig von der gewünschten mittleren Ausgangsspannung des Brückzweiges eingestellt oder geregelt werden kann. Ebenso ist eine Schaltungsanordnung von Gleichstromstellern oder Pulswechselrichtern gezeigt. Zudem zeigt die SU 1728 954 A1 ein Verfahren zur adaptiven Steuerung einer Schaltfrequenz für einen Antrieb mit einem Gleichstrommotor.

### Offenbarung der Erfindung

Das erfindungsgemäße Verfahren wird im Anspruch 1 genau definiert. Vorteilhafte Ausgestaltungen sind Gegenstand der auf diese rückbezogenen Unteransprüche.

Das erfindungsgemäße Verfahren zeichnet sich dadurch aus, dass das Pulsweitenmodulations-Ansteuersignal in Abhängigkeit von einem Freilaufstromverlauf in dem passiven Freilauf bestimmt wird. Bei der Berechnung des Pulsweitenmodulations-Ansteuersignals wird also mit anderen Worten der in dem passiven Freilauf fließende Freilaufstromverlauf ermittelt und bei der Bestimmung des Pulsweitenmodulations-Ansteuersignals berücksichtigt. Dadurch ist es möglich, beim Bestimmen beziehungsweise Berechnen des Pulsweitenmodulations-Ansteuerungssignals dieses in Bezug auf den jeweiligen Anwendungsfall in Abhängigkeit der unterschiedlichen Betriebszustände des Gleichstrommotors zu bestimmen.

Vorteilhafterweise wird unterschieden, ob der Freilaufstrom zu Null wird oder ungleich Null bleibt. Bei kleinen Soll-Strömen geht der Phasenstrom im Freilauf auf null zurück, beziehungsweise der Freilaufstrom geht auf null zurück. Bei größeren Motorströmen hingegen fließt der Freilaufstrom ständig, da nicht genug Zeit zum Auslaufen zur Verfügung steht, und ist somit ungleich Null. Durch Berücksichtigung dieser unterschiedlichen Zustände des Freilaufstromverlaufs im Betrieb des Gleichstrommotors kann auf einfache Art und Weise ein optimiertes Pulsweitenmodulations-Ansteuersignal bestimmt werden.

Bei einem Freilaufstromverlauf durch Null, also wenn der Spulenstrom in dem passiven Freilauf auf null zurückgeht, wird der Spuleninnenwiderstand des Gleichstrommotors bei der Bestimmung des Pulsweitenmodulations- . Ansteuersignals vernachlässigt. Wobei vorteilhafterweise dann der mittlere Gesamtstrom vorgegeben und zur Bestimmung des Pulsweitenmodulations-Ansteuersignals (mit-)verwendet wird. Vorteilhafterweise wird bei einem Freilaufstrom (i_{f}) auf null zurückgehend die Zeit, in der der Freilaufstrom Null ist, bei Berechnung des Ansteuersignals berücksichtigt.

Ferner ist vorgesehen, dass bei einem Freilaufstrom stets ungleich Null, wenn also der Spulenstrom in dem passiven Freilauf nicht auf null zurückfällt, die Spuleninduktivität bei der Bestimmung des Pulsweitenmodulations-Ansteuersignals vernachlässigt wird. Wobei mit Vorteil dann der mittlere Strom am Spulenwiderstand vorgegeben und dann zur Bestimmung des Pulsweitenmodulations-Ansteuersignals (mit-)verwendet wird.

Zweckmäßigerweise wird der Freilaufstromverlauf durch näherungsweises Rechnen bestimmt. Es wird also näherungsweise berechnet, wie sich der Freilaufstrom in welcher Betriebssituation verhält. Es wird also der Nulldurchgang des Spulenstroms im passiven Freilauf näherungsweise berechnet. So kann ein besonders schnelles Optimieren des Pulsweitenmodulations-Ansteuersignals erfolgen.

Nach einer Weiterbildung der Erfindung wird das Pulsweitenmodulations-Ansteuersignal zumindest anhand der Pulsweitenmodulations-Frequenz, einer Spuleninduktivität, einem Spuleninnenwiderstand, einer Betriebsspannung und/oder einer Drehzahl des Gleichstrommotors bestimmt. Die genannten Werte können auf einfache Art und Weise erfasst oder ermittelt und dann zur Bestimmung des Pulweitenmodulations-Ansteuersignals, beziehungsweise des sogenannten Duty Cycles, verwendet werden.

Nach einer vorteilhaften Weiterbildung der Erfindung wird der Verlauf eines Soll-Spulenstroms und/oder einer Soll-Spulenspannung optimiert in Bezug auf Drehmomentschwankungen und/oder Geräuschentwicklungen durch das bestimmte Pulsweitenmodulations-Ansteuersignal vorgegeben. In Abhängigkeit von dem Freilaufstromverlauf, insbesondere von den zwei genannten unterschiedlichen Zuständen des Freilaufstromverlaufs, wird also ein in Bezug auf Drehmomentschwankungen und/oder Geräuschentwicklungen optimiertes Pulsweitenmodulations-Ansteuersignal bestimmt beziehungsweise vorgegeben.

Schließlich ist vorgesehen, dass der Verlauf des Soll-Spulenstroms und/oder der Soll-Spulenspannung für mindestens zwei Phasen mit Hilfe einer Werte-Tabelle vorgegeben wird. Das Pulsweitenmodulations-Ansteuersignal wird somit nicht jedes Mal aufs Neue berechnet oder allein mit Hilfe von Abschätzungen bestimmt, sondern kann mit Hilfe von in der Tabelle hinterlegten Werten, die zuvor beispielsweise durch Versuche festgelegt wurden, vorgegeben werden. Insgesamt erlaubt das vorteilhafte Verfahren somit ein schnelles Vorgeben/Einstellen eines optimalen Pulsweitenmodulations-Ansteuersignals und damit die Verwendung eines bürstenlosen Gleichstrommotors auch in geräuschkritischen Situationen, auf einfache und kostengünstige Art und Weise.

Im Folgenden soll die Erfindung anhand einiger Figuren näher erläutert werden.
Dazu zeigen
- Figur 1: einen Stromfluss in einer pulsweitenmodulations-gesteuerten Vollbrücke mit einem passiven Freilauf,
- Figur 2: einen schematischen Stromverlauf eines Freilaufstroms,
- Figur 3: einen weiteren schematischen Stromverlauf des Freilaufstroms,
- Figur 4: ein schematisches Blockschaltbild des vorteilhaften Verfahrens und
- Figur 5: einen beispielhaften notwendigen Stromfluss für einen geräuscharmen Betrieb über eine Phase.

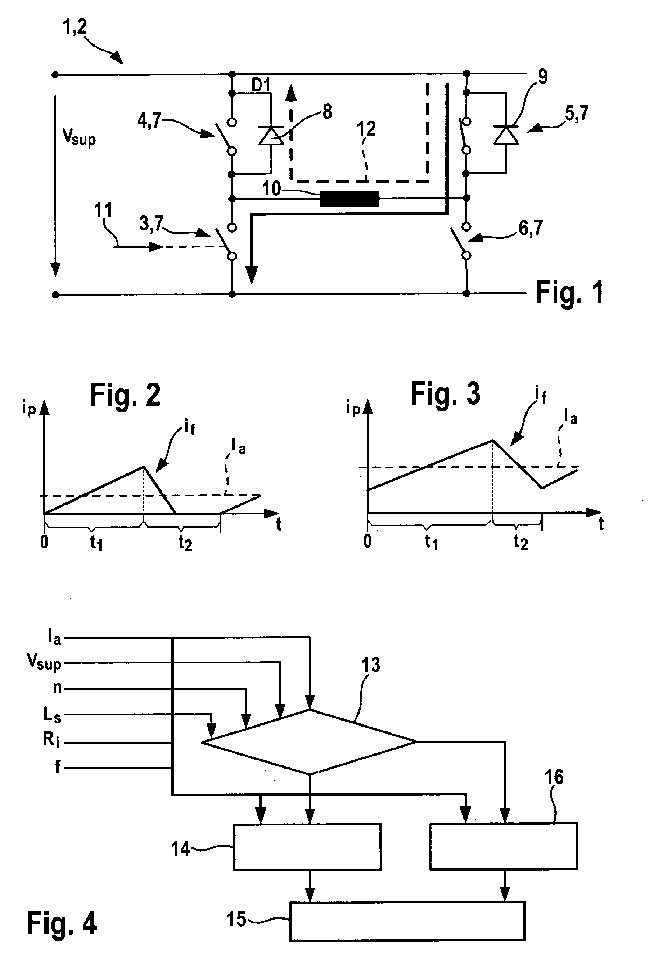

Die Figur 1 zeigt schematisch eine 2H-Endstufe 1 zur Ansteuerung eines niederinduktiven, zweiphasigen Gleichstrom- beziehungsweise Synchronmotors. Für jede Phase des Gleichstrommotors ist dabei eine Vollbrücke vorgesehen, wobei in der Figur 1 nur eine Vollbrücke 2 dargestellt ist. Die Vollbrücke 2 weist vier Schaltelemente 3, 4, 5, 6 auf, die jeweils als MOSFET 7 ausgebildet sind. Alternativ könnten je nach Randbedingung stattdessen auch Bipolartransistoren oder IGBTs (Insulated-Gatebipolartransistor = Bipolar Transistor mit isolierter Gate-Elektrode) eingesetzt werden. Den Schaltelementen 4 und 5 ist dabei jeweils eine Freilaufdiode 8, 9 zugeordnet. Vorteilhafterweise wird ein handelsüblicher n-Kanal MOSFET als Schaltelement eingesetzt, sodass die Freilaufdioden 8, 9 als Substratdioden bereits ohne zusätzlichen Schaltungsaufwand im MOSFET-Bauteil vorhanden sind. Die Vollbrücke 2 wird in dem Ausführungsbeispiel zur Generierung des Strom-/Spannungsverlaufes in der Spule 10 (Phase) des Gleichstrommotors in einer Halbwelle nur lowside getaktet. Zum Ansteuern wird also ein Pulsweitenmodulations-Ansteuerungssignal auf die Lowside-Schaltelemente 3 oder 6 gegeben, wie durch einen Pfeil 11 angedeutet. Das Schaltelement 4 bleibt während dieser Halbwelle permanent ausgeschaltet, das gegenüberliegende Highside-Schaltelement 5 permanent eingeschaltet und das Lowside-Schaltelement 6 ausgeschaltet.

Prinzipiell können auch die (Highside-)Schaltelemente 4, 5 getaktet werden und die (Lowside-)Schaltelemente 3, 6 im statischen Zustand gehalten werden. Dazu ist jedoch der elektronische Aufwand zur Ansteuerung der Schaltelemente 3, 4, 5, 6 insgesamt größer.

Wird das Schaltelement 3 aufgrund des Pulsweitenmodulations-Ansteuerungssignals (11) eingeschaltet, nimmt der Stromfluss durch die Spule des Gleichstrommotors zu. Wird das Schaltelement 3 anschließend wieder geöffnet, so fließt der durch die Spuleninduktivität verursachte, sinkende Strom über den durch die Freilaufdiode 8 und das geschlossene Schaltelement 5 eingestellten beziehungsweise freigegebenen passiven Freilauf weiter, wie durch einen gestrichelten Pfeil 12 angedeutet. Je nach gewünschtem mittlerem Motorstrom ist das Schaltelement 3 kürzer oder länger zu schließen.

Die Figur 2 zeigt in einem Diagramm den schematischen Stromverlauf iₚ in der Spule 10 in Abhängigkeit von einem gewünschten mittleren Spulenstrom Iₐ über die Zeit t. Die Figur 2 zeigt dabei einen Anwendungsfall bei kleinen beziehungsweise niedrigen Soll-Motorströmen (Iₐ), bei denen der Phasenstrom beziehungsweise Spulenstrom ip im Freilauffall, also in dem in der Figur 1 dargestellten Fall, auf null zurückgeht. Die Einschaltzeit des Schaltelements 3 durch das Pulsweitenmodulations-Ansteuerungssignal 11 ist hierbei mit t₁ gekennzeichnet. Während der Zeit t₂, in der das Schaltelement 3 geöffnet beziehungsweise ausgeschaltet ist, geht der Spulenstrom ip auf null zurück und erfährt einen sogenannten Nulldurchgang, bevor das Schaltelement 3 wieder eingeschaltet wird und der Spulenstrom ip wieder ansteigt.

Die Figur 3 zeigt denselben Sachverhalt jedoch bei großen beziehungsweise höheren gewünschten Motorströmen Iₐ. In diesem Fall fällt die Einschaltzeit t₁ des Schattetements 3 länger und die Ausschaltzeit t₂ kürzer als im vorhergehenden Ausführungsbeispiel aus. Der Phasenstrom beziehungsweise Spulenstrom ip geht dabei nicht auf mehr Null zurück und fließt im Freilauffall ständig. Das Integral über den Stromfluss ip muss dem gewünschten, vorgegebenen mittleren Motorstrom Iₐ entsprechen.

Besonders im Fall von niederinduktiven Gleichstrommotoren, bei denen der Spulenstrom ip während eines Pulsweitenmodulations-Zyklusses (t₁+t₂) auf null zurückgeht, entstehen Verzerrungen des gewünschten Spannungsverlaufs durch den passiven Freilauf. Dies kann zu unerwünschten Geräuschentwicklungen und/oder Drehmomentschwankungen führen.

Vorteilhafterweise wird bei der Bestimmung des Pulsweitenmodulations-Ansteuersignals (11) nunmehr der Freilaufstrom berücksichtigt, wobei bevorzugt unterschieden wird zwischen den Anwendungsfällen der Figuren 2 und 3. Bei der Berechnung beziehungsweise des Pulsweitenmodulations-Ansteuersignals wird somit, wenn der Freilaufstrom auf null zurückgeht, anders vorgegangen, wie wenn der Freilaufstrom nicht auf null zurückgeht, sondern ständig fließt.

Die Figur 4 zeigt dazu in einem Blockschaubild das vorteilhafte Verfahren zur Ansteuerung des Gleichstrommotors. In einem ersten Schritt 13 wird zunächst bestimmt, ob der Freilaufstrom i_{f} gleich Null oder ungleich Null ist beziehungsweise auf null zurückgeht. Der Freilaufstrom (-Verlauf) i_{f} entspricht dabei dem in der Zeitspanne t₂ verlaufenden Spulenstrom ip. Dazu werden der mittlere Soll-Motorstrom Iₐ, die Betriebs- beziehungsweise Versorgungsspannung Vₛᵤₚ, die Drehzahl n sowie die Spuleninduktivität Lₛ erfasst, und anhand der erfassten beziehungsweise ermittelten Werte der Freilaufstrom i_{f} berechnet beziehungsweise näherungsweise berechnet. Ergibt die Berechnung, dass der Freilaufstrom i_{f} (gemäß Figur 2) auf null zurückgeht, so wird ein Algorithmus 14 zur Bestimmung beziehungsweise Berechnung des Pulsweitenmodulations-Ansteuersignals (Duty Cycle) 15 verwendet. Ist der Freilaufstrom i_{f} ungleich Null beziehungsweise fließt ständig, so wird stattdessen ein Algorithmus 16 angewandt. Die Algorithmen 14, 16 unterscheiden sich im Wesentlich darin, dass bei einem Freilaufstrom i_{f} der auf null zurück geht (Algorithmus 14) ein Motorinnenwiderstand Rᵢ vernachlässigt und ein mittlerer Gesamtstrom vorgegeben wird, wohingegen bei Freilaufströmen iₜ ungleich Null (Algorithmus 16) die Spuleninduktivität Lₛ vernachlässigt und ein mittlerer Strom als Grundlage zur Bestimmung des Pulsweitenmodulations-Ansteuersignals 15 vorgegeben wird. In beiden Fällen wird dabei außerdem die Pulsweitenmodulations-Frequenz f berücksichtigt. Darüber hinaus wird zur Bestimmung des Pulsweitenmodulations-Ansteuersignals eine Werte-Tabelle verwendet, aus der vorher, beispielsweise durch Versuche ermittelte Werte abgerufen werden können.

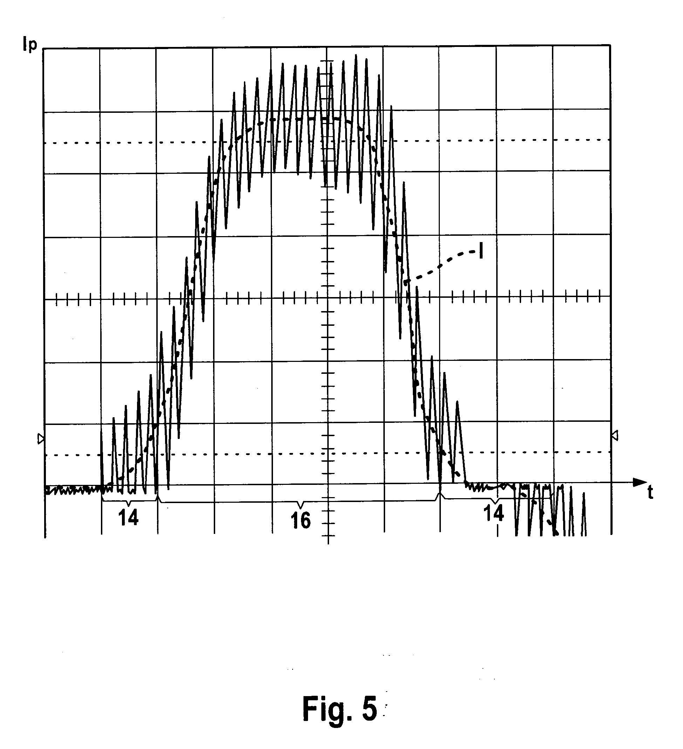

Insgesamt kann somit ein für einen geräuscharmen Betrieb notwendiger Stromfluss I, wie in der Figur 5 über eine Phase dargestellt ist, erzeugt werden. Bei niedrigen Strömen, bei denen der Freilaufstrom i_{f} auf null zurückgeht, wird dabei Algorithmus 14 und im Übrigen der Algorithmus 16 zur Bestimmung des Pulsweitenmodulations-Ansteuersignals 15 verwendet.

Das vorteilhafte Verfahren erlaubt somit auf einfache und kostengünstige Art und Weise unter Verwendung eines passiven Freilaufs (8) den geräuscharmen Betrieb eines niederinduktiven Gleichstrom- beziehungsweise Synchronmotors.

## Patentansprüche

1. Verfahren zum Betreiben eines bürstenlosen Gleichstrommotors, der über zwei Vollbrücken (2), die zumindest einen passiven Freilauf aufweisen, mittels eines Pulsweitenmodulations-Ansteuersignals angesteuert wird, das in Abhängigkeit von einem Freilaufstromverlauf (i_{f}) in dem passiven Freilauf bestimmt wird, **dadurch gekennzeichnet, dass** bei einem Freilaufstromverlauf (i_{f}) durch Null ein erster Algorithmus (14) und bei einem Freilaufstromverlauf (i_{f}) stets ungleich Null ein zweiter Algorithmus (16) zur Bestimmung des Pulsweitenmodulations-Ansteuersignals (15) verwendet wird, wobei bei dem ersten Algorithmus (14) ein Motorinnenwiderstand (Rᵢ) und bei dem zweiten Algorithmus (16) eine Spuleninduktivität (Lₛ) vernachlässigt wird.

2. Verfahren nach Anspruch 1, **dadurch gekennzeichnet, dass** der Verlauf des Freilaufstroms (i_{f}) durch näherungsweises Rechnen bestimmt wird.

3. Verfahren nach einem der vorhergehenden Ansprüche, **dadurch gekennzeichnet, dass** das Pulsweitenmodulations-Ansteuersignal zumindest anhand der Pulsweitenmodulations-Frequenz (f), einer Spuleninduktivität (Lₛ), einem Spuleninnenwiderstand (Rᵢ), einer Betriebsspannung (Vₛᵤₚ) und/oder einer Drehzahl (n) des Gleichstrommotors bestimmt wird.

4. Verfahren nach einem der vorhergehenden Ansprüche, **dadurch gekennzeichnet, dass** bei einem Freilaufstrom (i_{f}) auf null zurückgehend der mittlere Gesamtstrom vorgegeben wird.

5. Verfahren nach einem der vorhergehenden Ansprüche, **dadurch gekennzeichnet**, das bei einem Freilaufstrom (i_{f}) auf null zurückgehend die Zeit, in der der Freilaufstrom Null ist, bei Berechnung des Ansteuersignals berücksichtigt wird.

6. Verfahren nach einem der vorhergehenden Ansprüche, **dadurch gekennzeichnet, dass** bei einem Freilaufstromverlauf (i_{f}) stets ungleich Null der mittlere Strom durch den Spuleninnenwiderstand (Rᵢ) vorgegeben wird.

7. Verfahren nach einem der vorhergehenden Ansprüche, **dadurch gekennzeichnet, dass** bei einem Freilaufstromverlauf (i_{f}) stets ungleich Null die Spuleninduktivität (Lₛ) bei der Bestimmung vernachlässigt wird.

8. Verfahren nach einem der vorhergehenden Ansprüche, **dadurch gekennzeichnet, dass** der Verlauf eines Soll-Spulenstroms (Iₐ) und/oder einer Soll-Spulenspannung optimiert in Bezug auf Drehmomentschwankungen und/oder Geräuschentwicklungen durch das Pulsweitenmodulations-Ansteuersignal vorgegeben wird.

9. Verfahren nach einem der vorhergehenden Ansprüche, **dadurch gekennzeichnet, dass** der Verlauf des Soll-Spulenstroms (Iₐ) und/oder der Soll-Spulenspannung über mindestens zwei Phasen mit Hilfe einer Werte-Tabelle vorgegeben wird.

## Claims

1. Method for operating a brushless DC motor, which is actuated via two full bridges (2), which have at least passive freewheeling, by means of a pulse width modulation actuation signal, which is determined depending on a freewheeling current profile (i_{f}) during passive freewheeling, **characterized in that**, in the case of a freewheeling current profile (i_{f}) through zero, a first algorithm (14) is used and, in the case of a freewheeling current profile (i_{f}) always unequal to zero, a second algorithm (16) is used for determining the pulse width modulation actuation signal (15), wherein, in the case of the first algorithm (14), a motor internal resistance (Rᵢ) is not taken into consideration and, in the case of the second algorithm (16), a coil inductance (Lₛ) is not taken into consideration.

2. Method according to Claim 1, **characterized in that** the profile of the freewheeling current (i_{f}) is determined by approximate calculation.

3. Method according to one of the preceding claims, **characterized in that** the pulse width modulation actuation signal is determined at least using the pulse width modulation frequency (f), a coil inductance (Lₛ), a coil internal resistance (Rᵢ), an operating voltage (Vₛᵤₚ) and/or a speed (n) of the DC motor.

4. Method according to one of the preceding claims, **characterized in that**, in the case of a freewheeling current (i_{f}) returning to zero, the average total current is predetermined.

5. Method according to one of the preceding claims, **characterized in that**, in the case of a freewheeling current (i_{f}) returning to zero, the time during which the freewheeling current is zero is taken into consideration in the calculation of the actuation signal.

6. Method according to one of the preceding claims, **characterized in that**, in the case of a freewheeling current profile (i_{f}) always unequal to zero, the average current through the coil internal resistance (Rᵢ) is predetermined.

7. Method according to one of the preceding claims, **characterized in that**, in the case of a freewheeling current profile (i_{f}) always unequal to zero, the coil inductance (Lₛ) is not taken into consideration in the determination.

8. Method according to one of the preceding claims, **characterized in that** the profile of a setpoint coil current (Iₐ) and/or a setpoint coil voltage is predetermined by the pulse width modulation actuation signal in optimized fashion in respect of torque fluctuations and/or noise development.

9. Method according to one of the preceding claims, **characterized in that** the profile of the setpoint coil current (Iₐ) and/or the setpoint coil voltage is predetermined over at least two phases with the aid of a look-up table.

## Revendications

1. Procédé de conduite d'un moteur à courant continu sans balais, qui est commandé au moyen de deux ponts complets (2) et qui présente au moins un fonctionnement en marche à vide passive, au moyen d'un signal de commande en impulsions modulées en largeur et déterminé en fonction de l'évolution (i_{f}) du courant en marche à vide passive,
**caractérisé en ce que**
au cas où l'évolution (i_{f}) du courant en marche à vide passe par zéro, un premier algorithme (14) est utilisé pour déterminer le signal de commande (15) en impulsions de largeur modulée, tandis que lorsque l'évolution (i_{f}) du courant en marche à vide est en permanence différente de zéro, un deuxième algorithme (16) est utilisé pour déterminer ce signal de commande en impulsions modulées en largeur, le premier algorithme (14) négligeant la résistance interne (Rᵢ) du moteur et le deuxième algorithme (16) négligeant l'inductance (Lₛ) des bobinages.

2. Procédé selon la revendication 1, **caractérisé en ce que** l'évolution du courant (i_{f}) en marché à vide est déterminée par calcul approché.

3. Procédé selon l'une des revendications précédentes, **caractérisé en ce que** le signal de commande en impulsions modulées en largeur est déterminé au moins à l'aide de la fréquence (f) de la modulation de la largeur des impulsions, l'inductance (Lₛ) des bobinages, la résistance interne (Rᵢ) des bobinages, la tension de service (Vₛᵤₚ) et/ou la vitesse de rotation (n) du moteur à courant continu.

4. Procédé selon l'une des revendications précédentes, **caractérisé en ce que** lorsque le courant (i_{f}) en marche à vide revient à zéro, le courant total moyen est prédéterminé.

5. Procédé selon l'une des revendications précédentes, **caractérisé en ce que** lorsque le courant (i_{f}) en marche à vide revient à zéro, la durée pendant laquelle le courant en marche à vide est nul est prise en compte lors du calcul du signal de commande.

6. Procédé selon l'une des revendications précédentes, **caractérisé en ce que** lorsque l'évolution (i_{f}) du courant en marche à vide est en permanence différente de zéro, le courant moyen est prédéterminé par la résistance interne (Rᵢ) des bobinages.

7. Procédé selon l'une des revendications précédentes, **caractérisé en ce que** lorsque l'évolution (i_{f}) du courant en marche à vide est en permanence différente de zéro, l'inductance (Lₛ) des bobinages est négligée lors de la détermination.

8. Procédé selon l'une des revendications précédentes, **caractérisé en ce que** l'évolution du courant de consigne (Iₐ) dans les bobinages et/ou de la tension de consigne des bobinages, optimisée en fonction des variations du couple de rotation et/ou du bruit produit, est prédéterminée par le signal de commande en impulsions modulées en largeur.

9. Procédé selon l'une des revendications précédentes, **caractérisé en ce que** l'évolution du courant de consigne (Ia) dans les bobinages et/ou de la tension de consigne des bobinages sur au moins deux phases est prédéterminé à l'aide d'un tableau de valeurs.
